# EUROPEAN PATENT SPECIFICATION

(11) **EP 1 457 078 B1**
(45) Date of publication and mention of the grant of the patent: **08.03.2006**
(21) Application number: 01274991.7
(22) Date of filing: 18.12.2001
(51) Int. Cl.: H04Q 7/38

(54) **METHOD FOR MIGRATING SUBSCRIBER DATA BETWEEN DIFFERENT SERVERS OF A TELECOMMUNICATIONS NETWORK**
VERFAHREN ZUM TRANSFERIEREN VON TEILNEHMERDATEN ZWISCHEN VERSCHIEDENEN SERVERN EINES TELEKOMMUNIKATIONSNETZES
PROCEDE DE MIGRATION DE DONNEES D'ABONNES ENTRE DIFFERENTS SERVEURS D'UN RESEAU DE TELECOMMUNICATION

(43) Date of publication of application: 15.09.2004
(73) Proprietor: TELEFONAKTIEBOLAGET LM ERICSSON (publ), 164 83 Stockholm (SE)
(72) Inventor: SANCHEZ HERRERO, Juan, Antonio, E-28004 Madrid (ES)
(74) Representative: Meyer, Jochen
(86) International application number: PCT/EP2001/015031
(87) International publication number: WO 2003/053088

(56) References cited:
- EP-A- 1 065 904
- WO-A-00/24216
- WO-A-01/17309
- DE-A- 19 922 185
- US-A- 6 115 463

## Description

### TECHNICAL FIELD OF THE INVENTION

The present invention relates to telecommunications systems requiring to handle subscriber data and, in particular, to the migration of said subscriber data between home servers of telecommunications systems.

### BACKGROUND

In a telecommunications network it is common to keep data related to the users (also called subscribers) of the various telecommunication systems that constitute it at certain places (nodes) of said network where said data (hereinafter referred as: *subscriber data*) can be accessed and used when needed and, if proceeds, modified.

Each user have, then, his/her own subscriber data on each telecommunication system he/she is subscribed.

Said subscriber data may comprise various kind of data needed to serve and address to the user they belong to. Its complexity and content depends basically on the type of telecommunication system where said user is subscribed; but, basically, in the most complex telecommunication systems, said subscriber data can be considered as comprised of: subscription data (SD) and personalization data (PD). SD use to contain the more static data related to the subscription (e.g.: public directory number, operator determined barring, provision/withdrawal of supplementary services, etc), i.e.: in general, those data which are set and managed by the serving network operator according to the subscription particularities; while PD use to contain the data than the user can dynamically modify (e.g.: supplementary service activation status, supplementary services related data, user preferences, etc.), i.e.: in general, those data which are used to be set up and managed by the user according to his/her preferences.

In particular, mobile systems in a telecommunications network use to store said subscriber data in dedicated nodes. Said dedicated nodes are known as Home Location Registers (HLRs).

Each one of said HLR acts as home server for a given set of users and is queried from other nodes within a mobile system whenever information related to any of the users it is serving is needed.

For each one of the users it is serving, an HLR store the corresponding subscriber data (SD and PD) of said user. Within SD it is stored data such as public identifiers (e.g.: Mobile Subscriber ISDN number, or MSISDN), private identifier (e.g.: International Mobile Subscriber Identity, or IMSI), user security information (e.g.: keys, authentication vectors), subscription information of Customised Application of Mobile Enhanced Logic (CAMEL), etc.. Within PD it is stored data related to supplementary service status (e.g.: call forwarding status), supplementary services related data (e.g.: forwarding-to number), user preferences (e.g.: maximum number of calls), user profiles, etc.

Within a given HLR subscriber data of a user can be identified (for instance, upon query of information from other node) by different identification parameters that can vary depending on the traffic case. The most common of those identification parameters use to be the private identifier of said user (IMSI) or one of his/her public identifiers (MSISDN).

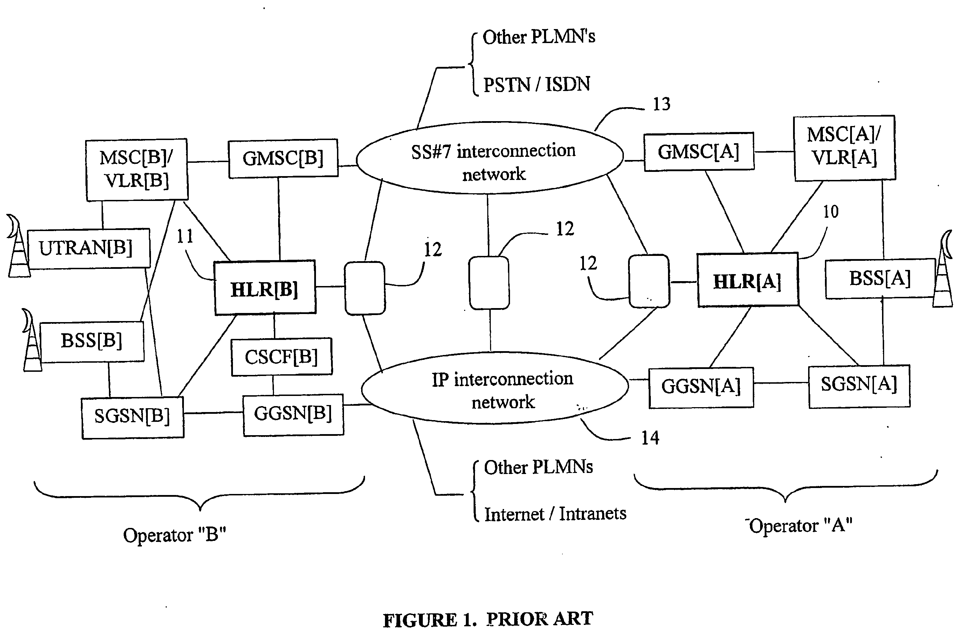

In Fig. 1 a schematic view of a of two mobile systems of different Public Land Mobile Networks (PLMNs) (Operator "A" and Operator "B") within a telecommunications network is shown.

For the sake of a greater simplicity not all nodes, servers and possible interconnection networks have been shown, but only the most relevant ones to understand the scope of this invention.

It has to be remarked also that, although home server 10 (HLR[A]) and home server 11 (HLR[B]) appears in Figure 1 to belong to different operators and being respectively: a second generation (2G) home server within a 2G mobile system providing General Packet Radio Service (GPRS, also known as 2.5G mobile system), and a third generation (3G) home server; this does not restrict nor affect the scope of the present invention. Both home servers depicted in Fig. 1 (10, 11) could belong to the same operator, or being both from the same or different mobile systems generation (2G, 2.5G, 3G).

Fig. 1 also shows some auxiliary servers (servers 12) that can support some additional functions for mobile systems. Said servers may or may not belong to the administrative or physical domain of a given operator; also they can be accessed directly, through internal connection network of a given operator, or through any of the interconnection networks that links said operator with other public or private networks.

Considering the fact that subscriber data of a given user are permanently stored in a specific home server (for instance HLR[A]), there can be situations wherein it is desired to migrate some relevant parts of said data to a new home server (for instance HLR[B]).

Examples of said situations can be multiple and due to different reasons. Some of them are listed below:
The user acquires or receives a new Subscriber Identity Module (or SIM), being the identifier of the new SIM (IMSI) belonging to the IMSI-series assigned to a different HLR of the same operator.
Subscriber data of a given user needs to be moved to an HLR of a different operator due, for instance, to the fact that the user acquires or receives a new subscription (new SIM) that belongs to said operator.
Subscriber data of a given user need to be moved between different HLRs of the same or different operator due, for instance, to the fact that the user acquires or receives a new 3G subscription replacing the old 2G or 2.G one.

In said situations the user can experience different kind of troubles. For instance:
Lose his/her old public identifier(s) (e.g.: MSISDN number(s)), because new one(s) is(are) assigned to the new/changed subscription; thus having to communicate out the new public identifier(s) to his/her contacts.
Lose dynamic or static data related to supplementary services; thus having to re-program them manually.
Lose user profile and/or terminal profile information, mainly when the subscription is moved from one to other operator.

There can be certain time gap wherein the user has not any available subscription to use because the routing tables in the different nodes of the affected system(s) has not yet been updated for finding out the right HLR (or the right operator gateway node) when needed.

Also in said situations, network operators have to face also some drawbacks. For instance: manually dumping subscriber data from the old HLR and placing them into the new one, or manually setting of subscriber data in the new HLR.

Thus, for the user, it should be desirable to keep as much as possible of his/her old subscriber data related to the old subscription, including the public identifiers (e.g: MSISDN), when his/her subscription is moved from one HLR to a new one.

On the other hand, it shall be desirable for network operators to perform an smooth and fast subscriber data migration which does not necessarily affects to a great number of subscribers for being cost-effective, and that takes place with a minimum user and network disturbance.

### PRIOR ART SOLUTIONS

A known prior art solution for the aforementioned situations is to first dump manually subscriber data of those subscribers that are going to be migrated, and then, input them into the new HLR.

Drawbacks related to this kind of solution are also well known: they take a long time to be performed, it is not accurate, and it is not cost effective to perform the whole process when the migration affects to few users or only to one.

Another kind of prior art solution is disclosed for instance in patent application WO-9737506.

Said patent application teaches a system that allows to access (and use) the subscriber data of a given user that is now identified in the network by a new identifier; thus allowing, for instance, to keep the same MSISDN number for the same user in situations wherein the subscriber identity (IMSI) has been changed for that user.

For this purpose, patent application WO-9737506 discloses a "*translation register*" where, upon an input of the new (second) user identity in said register, the corresponding old (first) user identity is output, which is then used to address the right location register (HLR).

This kind of solution is suitable for situations wherein the subscriber data can remain into the same HLR. However, it can hardly be applied advantageously when said subscriber data have to be moved from one HLR to a new one; for instance: when the subscription is changed/moved to other operator, or when a given HLR is close to its storage or processing limit and some subscriptions have to be re-allocated to a new HLR.

Another prior art solution is disclosed in patent US-6115463.

Unlike patent application WO-9737506 cited above, this patent indeed allows a real migration of subscriber data between the old HLR and the new one.

However, according to patent US-6115463, there is always a "manual" intervention ("*data administrator generating command", "data administrator operating responsive to an operator request", "generating a command*") that determines when the migration process shall take place; thus the affected users probably have to stand with a situation in which they do not have any available subscription to use.

Also, according to this patent, the new HLR (the one receiving the subscriber data) does not have any opportunity to neglect to receive new subscriber data (e.g: no capacity, high-load situation due to traffic processing at that time, etc.); since only its common channel signalling functionality is checked, or no check at all is performed.

### SUMMARY OF THE INVENTION

The present invention provides a method and corresponding home server for migrating subscriber data related to a user in a telecommunications network from an old home server, wherein said user has an old subscription, to a new home server, wherein said user has a new subscription according to the claims.

According to a first embodiment of the present invention, the migration process takes place directly between the new home server and the old home server of said user.

To accomplish this first embodiment, in the new home server, and related to the new subscriber data of said user, it is stored one or more first identification parameters, and a mark for updating associated to a trigger condition.

Said first identification parameters stored in the new home server will be used to address the old home server of said user and, once in said old home server, to identify the old subscriber data related to said user stored in said old home server.

The mark for updating is a simple flag which is set to indicate if the subscriber data of a given user needs to be updated. Said mark is related to a trigger condition that determines when said updating shall take place; being the trigger condition, either related to the reception in the new home server of a given message related to said user, or related to a timer of a pre-set value.

When the trigger condition is detected in the new home server, either if the trigger condition was a timer, because there is a time-out of said timer, or, if the trigger condition was the reception of a given message, because said message has been received, the mark for updating is checked.

If the mark is set, then a message is sent from the new home server to the old home server requesting to retrieve the subscriber data stored in said old home server related to said user; wherein said message contains, at least, one of said first identification parameters in order to identify the corresponding subscriber data of said user in the old home server.

Upon reception of said message requesting subscriber data in the old home server, this server will look up the requested data by using one or more of the identification parameters received in the message. Once they have been found, the old home server will answer back to the new home server with a message containing the requested subscriber data.

The new home server will, upon reception of the answer message, update the current value of one or more of the elements that comprise the subscriber data of said user in said new home server with the corresponding ones received from the old home server, and the mark for updating related to said user will be reset.

Additionally, the old home server can remove the subscriber data related to said user once they have been sent to the new home server.

According to a second embodiment of the present invention, the migration process takes place among the new home server and the old home server of said user with the mediation of a management server.

To accomplish this, in the new home server, and related to the new subscriber data of said user, it is stored one or more second identification parameters, and a mark for updating associated to a trigger condition.

Said second identification parameters stored in the new home server will be used to address the management server and, once in said management server, to identify data related to said user stored in said management server.

The mark for updating is a simple flag which is set to indicate if the subscriber data of a given user needs to be updated. Said mark is related to a trigger condition that determines when said updating shall take place; being the trigger condition either related to the reception in the new home server of a given message related to said user, or related to a timer of a pre-set value.

Also, to accomplish with this second embodiment, in the management server it is stored at least one of said second identification parameters and, related to it, one or more first identification parameters.

Said first identification parameters stored in the management server will be used to address the old home server of said user and, once in said old home server, to identify the old subscriber data related to said user stored in said old home server.

When the trigger condition is detected in the new home server, either if the trigger condition was a timer, because there is a time-out of said timer; or, if the trigger condition was the reception of a given message, because said message has been received, the mark for updating is checked.

If the mark is set, then a message is sent from the new home server to the management server requesting to retrieve the subscriber data related to said user; wherein said message contains, at least, one of said second identification parameters in order to identify the corresponding first identification parameters related to said user in the management server.

Upon reception of said message requesting subscriber data in the management server, this server will look up the requested data by using one or more of the second identification parameters received in the message. Once they have been found, the management server will send a message to the old home server requesting to retrieve the subscriber data stored in said old home server related to said user; wherein said message contains, at least, one of said first identification parameters in order to identify the corresponding subscriber data of said user in the old home server.

Upon reception of the message requesting subscriber data in the old home server, this server will look up the requested data by using one or more of the identification parameters received in the message. Once they have been found, the old home server will answer back to the management server with a message containing the requested subscriber data.

On reception of said answer message in the management server, this server will send back an answer message to the new home server containing the received subscriber data.

The new home server will, upon reception of the answer message from the management server, update the current value of one or more of the elements that comprise the subscriber data of said user in said new home server with the corresponding ones received from the old home server, and the mark for updating related to said user will be reset.

Additionally, the old home server can remove the subscriber data related to said user once they have been sent to the new home server.

### BRIEF DESCRIPTION OF THE DRAWINGS

Figure 1 Shows an schematic view of two prior-art mobile systems within a telecommunications network.
Figure 2 Shows a simplified view of the various data which, related to a given user and according to a first embodiment of the present invention, are stored in two different home servers.
Figure 3 Shows the same view as shown in Figure 2, wherein, according to a second embodiment of the present invention, some data related to said user are also stored in a management server.
Figure 4 Shows a flow-chart and inter nodal operation showing the migration process of subscriber data according to the first embodiment of the present invention.
Figure 5 Shows a flow-chart and inter nodal operation showing the migration process of subscriber data according to the second embodiment of the present invention.
Figure 6 Shows the same view as shown in Figure 2 once the subscriber data have been migrated according to any of the embodiments of the present invention.

### DETAILED DESCRIPTION

The preferred embodiments of the present invention shall now be described in detail with reference to Figures 1 to 6.

Said preferred embodiments are described using mobile systems to exemplify the methods described hereinafter. However, it shall be understood that said methods are not limited to mobile systems, and than they can be applied to any other telecommunication systems handling subscriber data in specialized servers whenever subscriber data related to, at least, one user, needs to be migrated from one of those servers to a new one.

Reference is now made to Fig. 1 to illustrate a network scenario wherein the preferred embodiments of this invention can be carried out.

As mentioned above, for simplicity reasons, Fig. 1 shows only one home server node (HLR) per operator (10 and 11), and two different operators ("Operator B" and "Operator A"). However, more than one HLR can exist within an operator domain, being those HLRs from the same or different generation (2G, 2.5G, 3G) even within an operator domain.

Also some other servers or functional entities (12, GMSC, MSC/VLR, GGSN, SGSN, etc.) are shown with explanatory purposes for one of the embodiments of this invention. Servers (GMSC, MSC/VLR, GGSN, SGSN, etc) are well-known servers within present mobile systems; they perform well-know standardized functions belonging to the basic (core) functions standardized for mobile systems, and also can accomplish with other non-standardized functions if they are provided with the appropriate means (or implement the appropriate methods) to fulfil them. Servers 12 already exist in present mobile systems (as well as in other telecommunication systems) and they perform some additional functions such as, management support, maintenance support, auxiliary databases, etc.

For a greater clarity of the scope of the present invention, reference shall be made from now on to the terms:
HLR-OLD, to refer to the home server where the user has allocated the data related to the old subscription (old subscriber data); and
HLR-NEW to refer to the home server where said user has allocated the data related to the new subscription (new subscriber data);
regardless if both HLRs belongs or not to the same operator, or if both HLRs are or not from the same mobile system generation (2G, 2.5G, 3G), or even if both or one of them is an HLR of a 3G system implementing the, so called, IP- multimedia Subsystem (IMS) (in this latest case, the HLR is also known as Home Subscriber Server or HSS).

In Fig. 1, two kind of interconnection networks are shown as an example of the diverse network technologies that can link the various nodes of a telecommunications network: a Signalling System Number 7 (SS#7) network (13) and a Internet Protocol (IP) network (14). However, for the scope of the present invention, there are no restrictions related to the signalling protocol (or protocols) or to the network specific technology (or technologies) used for exchanging signalling information. Therefore, the interconnection network according to this invention can be any circuit switching oriented network (13), and any packet switching oriented network (14) or cell switching oriented network (14) (such as an Asynchronous Transfer Mode, or ATM, network), or any combination thereof; able to convey, at least, signalling information exchanged between the various nodes or servers of a telecommunications network.

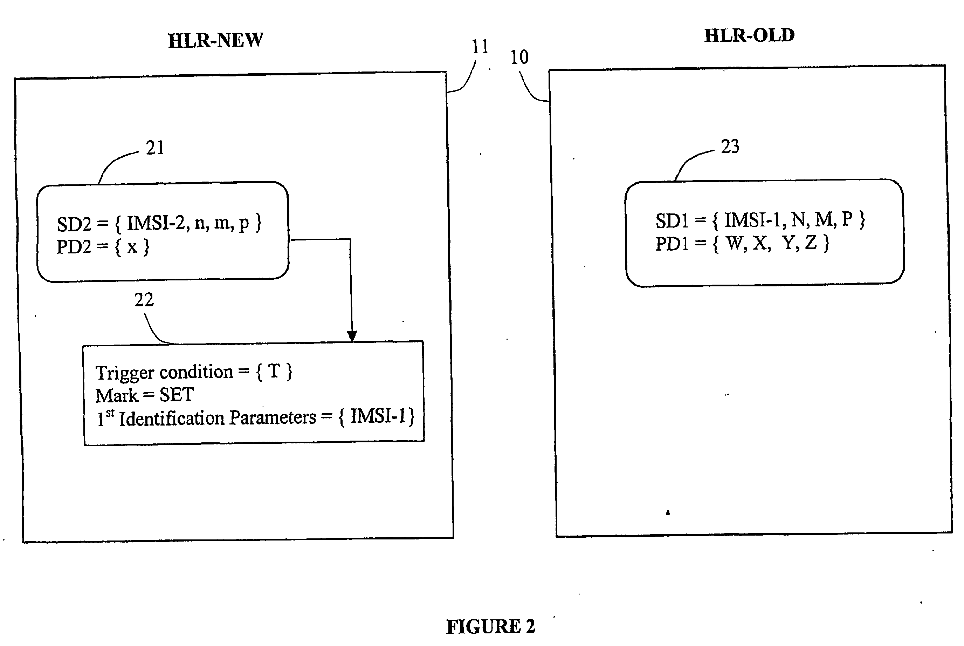

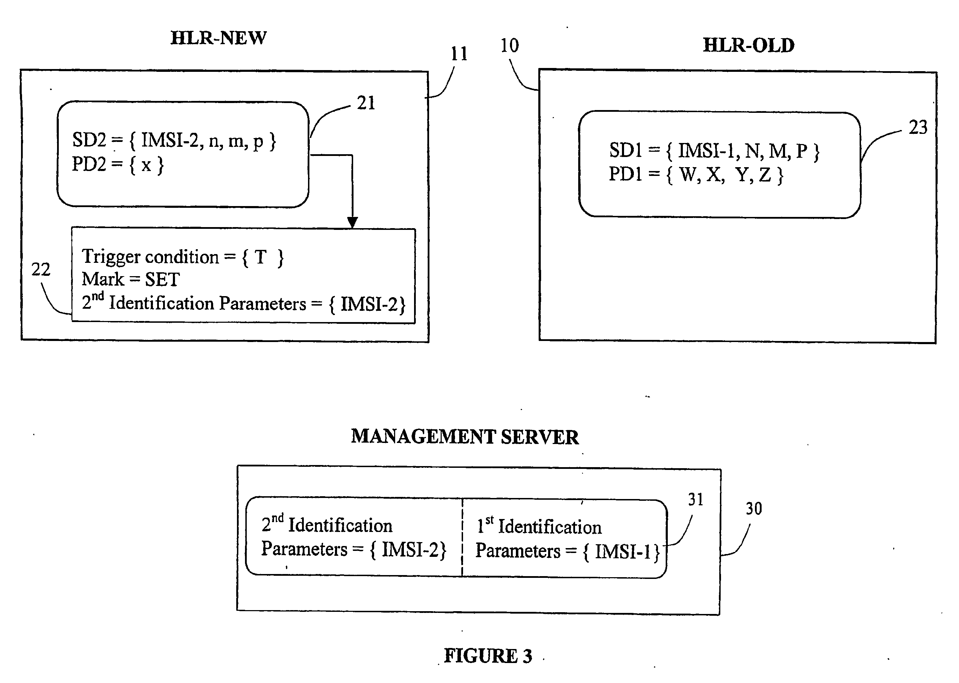

Reference is now made to Figures 2 and 3. In these Figures it is shown the content of both HLRs: HLR-OLD (10) and HLR-NEW (11) showing the registers (21, 23) where subscriber data of a given user use to be stored.

Any of said registers (21 or 23) storing each the subscriber data related to a given subscriber is a well known state-of-the-art technique in home servers of mobile systems. Within Fig. 2 (and other Figures in this patent application) any said registers (21 or 23) appears to be a "unique register" per user in an HLR; however, the content of said register can be distributed among multiple registers, of specialized content each, and related among them to a single subscription. If any of said registers (21 or 23) is single or distributed, is an implementation detail that does not affect the scope of the present invention.

In particular to registers 21 and 23, they will hereinafter be assumed to pertain to a given user whose subscriber data are going to be migrated from HLR-OLD (10) to HLR-NEW (11) according to this invention.

The type of the subscriber data stored in an HLR for a given user (e.g.: 21 or 23) can vary depending on the operator and on the generation of the mobile system. For instance, in 2G systems the public identifier(s) of a given user use to be one or more MSISDN numbers, while in 3G system a user can have multiple public identifiers with different formats: MSISDN, Uniform Resource Locator for Session Initiation Protocol (SIP-URL), URL for telephony (TEL-URL), etc.

In the same way, other subscriber data, such as the provided/withdrawn supplementary services, operator determined barring, related supplementary services data, user's different profiles, etc.; can vary from a 2G system to a 3G system either: because the format is not the same or because some data exist only in 3G systems or in 2G systems.

Since the scope of this invention is not affected by the detailed content of the subscriber data, for the sake of a greater simplicity said data have been assumed to be comprised of: subscription data (SD) and personalization data (PD); wherein the term SD shall hereinafter be used to refer to the more static data related to the subscription (such as public directory number or, more generally, user identifiers, operator determined barring, provision/withdrawal of supplementary services, user security information, etc.) that are typically set and managed by the serving network operator according to the subscription particularities; while the term PD shall hereinafter be used to refer to the data related to the subscription that are more dynamic and, therefore, suitable to be changed dynamically according to the user's preferences, or even managed by the user (such as supplementary service activation status, supplementary services related data, user preferences, etc.).

For a given user, the old subscriber data (23) stored in HLR-OLD (10) contains the old subscription data (SD1) and personalization data (PD1) that said user had defined and configured related to his/her old subscription and it has to be noticed that, according to this invention, no new data needs to be inserted or related to said existing data. Although only one register (23) is shown in Figures 2 or 3 as related to only one given user, it shall be understood that there can exist more registers (23) each one related with other users held within the same HLR-OLD (10).

Regarding old subscription data (SD1), only the IMSI related to said old subscription (IMSI-1) is shown in Figures 2 and 3, being the rest of SD1 content named with abstract references (N,M,P); anyhow, it shall be understood that typically said SD1 also comprise public identities related to said old subscription, such as the MSISDN related to said old subscription (MSISDN-1), operator determined barring, provision/withdrawal of supplementary services, etc.

Regarding old personalization data (PD1) also abstract references (W,X,Y,Z) are shown, that are assumed to contain data such as: supplementary services status activation, supplementary services additional data (e.g.: forwarding to number), user preferences active, user profiles, etc.

According to both embodiments of this invention, in the HLR-NEW a minimum set of data are pre-stored in the register (21) that intends to content the corresponding subscriber data concerning to the new subscription of said given user. Although only one register (21) is shown in Figures 2 or 3 as related to only one given user whose subscriber data are to be migrated, it shall be understood that there can exist more registers (21) each one related with other users in the same circumstance.

Regarding the new subscription data (SD2), said data shall comprise, at least, one identifier, such as the private user identity attached to said subscription (IMSI-2), that can be used to address the data stored in register 21.

Regarding the rest of possible SD2 and new personalization data (PD2) they can either: remain undefined, or be assigned to some predefined default values. Said predefined default values can be assigned concerning, for instance: to MSISDN number(s) related to the new subscription, that can be the same as the one(s) used for the old subscription (MSISDN-1) or new one(s) related exclusively to the new one (MSISDN-2); operator determined barring; provision/withdrawal of supplementary services; user preferences; user profiles; etc.. Said predefined default values are shown in figures 2 and 3 named with abstract references (n, m, p, x).

Some of said predefined default values can either: have a temporary default value to be used in the interim period until the migration procedure takes place, or be assigned to a predefined default value that can be recognized locally in the HLR-NEW as having "no value assigned yet". In any case, and as an implementation option, said default values can be explicitly marked as "default values" in order to later distinguish which one of them are going to be replaced with the equivalent values that, according to this invention, will be received from the HLR-OLD.

Related to said register that contains the new subscriber data (21) in the HLR-NEW, it is stored some additional data (22) that will needed to accomplish with the migration process.

According to both embodiments of this invention, said additional data (22) comprise: a mark for updating related to a trigger condition and a set of one or more identification parameters.

The mark for updating is a simple flag which is set to a given value (SET) to indicate that the subscriber data (21) of said given user needs to be updated by fetching old subscriber data (23) in a certain home server (10, HLR-OLD).

The trigger condition (represented as T in Figures 2 and 3) states the circumstance that determines when said updating (migration procedure) shall take place.

One option for said trigger can be implemented by starting a timer of a given value (including a "zero", 0, value) associated to the new subscription; in such a way that the timer can be started at any moment once said new subscriber data (21) and said additional data (22) related to it have been established. Then, the migration procedure shall take place at time-out of said timer. At this point it shall be noticed that a zero (0) value assigned to said timer implies that the migration procedure takes place immediately after said additional data (22) have been set up.

Other option for said trigger is to define one or a set of messages related to said user that can act as trigger for the migration procedure. No limits are set within this invention to the nature of a given message (MSG-U) that can be defined as a "trigger"; being the only condition that said message(s), directly or indirectly, addresses to (refers to) the subscriber data register (21) of said new user in said NEW-HLR (11); i.e.: if the message contains one of the user identities related to said subscriber, such as, for instance, the IMSI related to the new subscription (IMSI-2).

The type of message that can be used as "trigger message" (MSG-U) can also vary depending on the mobile system generation (if 2G, 2.5G or 3G); however the more suitable for accomplishing with the purpose of the present invention are those that are received in the home server whenever the user attach to (register with) the network using his/her new subscription (e.g.: using the new SIM). Examples of said messages are: an *"update-location"* message, an *"update-GPRS-location"* message or, as named within this invention, an *"IMS-registration"* message.

The first two messages ("*update-location", "update-GPRS-location*") are well known Mobile Application Part (MAP) messages that gets into the home server (HLR) of a given user when said user attach with his serving PLMN for circuit-switch services or packet-switch services, respectively.

The latest message, "*IMS-registration",* is a naming given within this invention, and intends to refer to any of the various signalling messages that are received in the HLR/HSS of a 3G system when an IP-multimedia user (IM-user) registers in the - multimedia Subsystem (IMS) of said 3G system; i.e.: when a user who is attached to the network for packet-switch services, registers with said network to get access to multimedia services, that are offered in 3G systems through packet-switch services.

Said registering messages arrive to the 3G HLR (also known as HSS) through the, so called, "Cx interface", which is the interface that links the home server (HSS/HLR) with the various of the, so called, "Call State Control Functions" (CSCFs), which are functional entities belonging to said IMS.

Various aspects of said IMS, including signalling messages through the "Cx interface" are still under drafting in 3GPP standardisation forum (held, for instance in 3GPP documents TS 23.228 and TS 24.228, public available at 3GPP web site http://www.3gpp.org). However, three of these messages received in the HSS through the "Cx interface" seems to be stable across the subsequent versions of the aforementioned 3GPP documents and can each be cited as examples of possible trigger messages for the purpose of this invention. They are (using the present 3GPP terminology in the cited 3GPP documents): *"Cx-Query", "Cx-Location"* and *"Cx-Profile".*

The message *"Cx-Query*" is sent from the, so called, interrogating-CSCF (I-CSCF) to the HSS when, for instance, a SIP "Register" message is received in said I-CSCF from a IM-user.

The message *"Cx-Location"* (named as *"Cx-Put"* in TS 23.228) is sent from the, so called, serving-CSCF (S-CSCF) to the HSS when said S-CSCF wants to update the data related with the server entity (S-CSCF) which is presently serving to said IM-user.

The message *"Cx-Profile"* (named as *"Cx-Pull"* in TS 23.228) is sent from the, so called, serving-CSCF (S-CSCF) to the HSS when said S-CSCF wants to download from the HSS the subscriber profile of an IM-user said S-CSCF is serving.

Details of said messages, as well as on how are they correlated in a IM-user registration procedure are widely explained in the aforementioned 3GPP documents TS 23.228 and TS 24.228.

According to both embodiments of this invention, the, hereinafter called, *first identification parameters* comprise one or more information elements, intended to be included in messages exchanged between telecommunications nodes of a telecommunications network, that , in this particular case, serve as routing keys both: to locate (route messages to) the appropriate HLR-OLD (10) and, once in said HLR-OLD, to locate the subscriber data of said user (23) within said HLR-OLD. According to the message routing techniques used in the known art, said first identification parameters can be, for instance: the IMSI related to the old subscriber data (IMSI-1), the MSISDN related to the old subscriber data (MSISDN-1), the MSISDN number associated to the HLR-OLD (MSISDN-1 STHS) plus a valid subscriber identification of said subscriber in said HLR-OLD (IMSI-1 or MSISDN-1), or any combination thereof.

Fig. 2 shows the overall data distribution across the HLR-NEW (11) and the HLR-OLD (10) according to the first embodiment of this invention.

According to this first embodiment, said first identification parameters are stored in the HLR-NEW (11) as a part of the aforementioned additional data (22).

Fig. 3 shows the overall data distribution across the HLR-NEW (11), the HLR-OLD (10) and the management server (30) according to the second embodiment of this invention. The entity acting as management server (30) can be one of the auxiliary servers (12) aforementioned with reference to Fig-1, and also any other well-known (standardized) servers within mobile systems (GMSC, MSC/VLR, GGSN, SGSN, etc.) given that they implement the methods taught in this invention.

According to this second embodiment, and as a part of the aforementioned additional data (22), the, hereinafter called, *second identification parameters* are stored in the HLR-NEW (11). Said second identification parameters comprise one or more information elements, intended to be included in messages exchanged between telecommunications nodes of a telecommunications network, that, in this second embodiment, serve as routing keys both: to locate (route messages to) the management server (30) and, once in said management server, to locate the information register that contains the data related to said user in said management server. According to the message routing techniques used in the known art, said second identification parameters can be, for instance: the IMSI related to the new subscriber data (IMSI-2), the MSISDN related to the new subscriber data (MSISDN-2), or both.

According to this second embodiment, the first identification parameters are stored in an information register (31) within the management server (30). They have the same scope, purpose and possible contents as cited previously, being its allocation the only difference regarding the data distribution aspect with the first embodiment.

In said register (31), the management server (30) stores, at least, one of said second identification parameters in connection with said first identification parameters, in such a way that, for a given user, there is one register (31) that contains a one-to-one relationship between said second identification parameters and said first identification parameters. Although only one register (31) is shown in Fig. 3 within the management server (30) as related to only one given user whose subscriber data are to be migrated, it shall be understood that there can exist more registers (31) each one related with other users in the same circumstance.

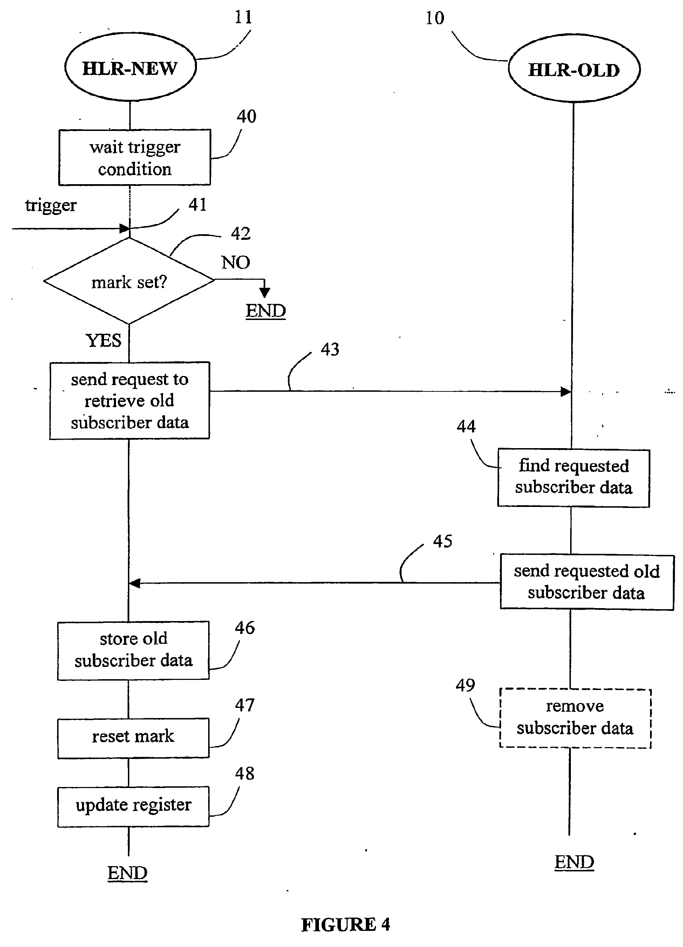

The procedure according to the first embodiment of this invention for migrating subscriber data (SD,PD) related to a given user from the old home server (HLR-OLD, 10), where said user had his/her old subscriber data (SD1,PD1), to the new home server (HLR-NEW, 11), where said user has his/her new subscriber data (SD2,PD2), shall now be described with reference to the flow depicted in Fig. 4.

Step 40 shows that, once the mark for updating was set in connection with a given subscriber data register (21), and the trigger condition established for said register (21), the HLR-NEW (11) does not perform any specific action for a given user, according to the methods disclosed in this invention, until said trigger condition is detected.

In step 41 the trigger condition is detected in the HLR-NEW (11).

When a timer was selected as the trigger condition, this event is detected by the time-out of said timer. The right subscriber data register (21) related to said user is then identified since the timer was started in connection with said register (21) related to said user.

When a message was selected as the trigger condition, this event is detected by comparing each message received in the HLR-NEW (11) with the message, or messages, previously stated as trigger message(s) in the additional data (22) (if any) related with the register (21) referenced by (addressed by) the received message. The right subscriber data register (21) related to said user is thus identified if the received message matches one of the ones previously defined trigger message(s).

Once the right register (21) has been identified, in step 42 it is checked if the mark for updating is set for said register (21). If it is not set, then either: the HLR-NEW performs no further actions, if the trigger condition was a timer, or process the incoming message normally, if the trigger condition was a message.

Otherwise, if the mark for updating is set, then in step 43 a message is sent from the HLR-NEW (11) to the HLR-OLD (10) requesting to retrieve the old subscriber data of said user (23).

In order to route a message through the various telecommunications nodes in the telecommunications network it can traverse, so it gets the wanted destination node, and also in order to point out in the destination node the particular data said message affects, it is a well-know technique to include in said message one or more parameters that can act both: as routing keys for the routing nodes and as identifiers for the destination node. For this purpose, the message sent in step 43 contains one or more of the aforementioned first identification parameters on it that will serve both: to locate the wanted destination node (HLR-OLD, 10) and, once in said HLR-OLD, to identify the right register (23) that contains the old subscriber data (SD1,PD1) stored in said HLR-OLD.

Within the scope of this invention, this message, as well as the possible answer message have to be seen as messages exchanged between Application Layer (ISO defined Layer-7) entities in different nodes; wherein MAP, within the scope of a SS#7 protocol stack, or other well known Application Layer communication protocol using other existing protocol stack for communications (such as Transmission Control Protocol over Internet Protocol, or TCP/IP protocol stack), could be a possible implementation alternative to implement said message exchange between application layers entities. Therefore, there could be aspects dealing with lowers layers (such as Session Layer, Transport Layer, Network Layer, etc), and also dealing with the nature of the signalling protocols used across the interconnection network(s) (e.g.: traditional SS#7 signalling, IP based signalling, SS#7 over IP signalling, etc.), that could imply the insertion of some additional parameters in the message (for instance, some routing keys for answering back to the message), or even the initiation of some additional procedures (for instance: initiating an application dialog or establishing one or more transport connections). However, said kind of details does not require any inventive step beyond the methods taught within this invention, since the same existing communication techniques (comprising: dialogs, transportation aspects, etc.) that applies when a communication is established between two communication nodes of a telecommunications network can also be applied for the conveyance of the messages cited within this invention.

When the request message sent in step 43 arrives to HLR-OLD, then, in step 44, the HLR-OLD (10) looks up the corresponding register (23) that contains subscriber data (SD1,PD1) by using the first identification parameters received in said message. Subsequently, in step 45, a message is sent back to the requesting node (HLR-NEW within this embodiment) that contains part or all the content of said register (23). If said answer message sent in step 45 from the HLR-OLD to the HLR-NEW contains: all the content of said register (23), or just all or part of personalization data (PD1), or just all or part of subscription data (SD1), or any combination thereof; is an implementation matter that can depend on several factors: for instance: if the network operator of both HLRs (HLR-NEW and HLR-OLD) is the same or not (some data might be not relevant or being not wanted or relevant to be sent), if both HLRs are or not from the same mobile system generation, etc.. However, to accomplish with the purpose of this invention it could be sufficient if only a part of said personalization data (PD1), or just a part of said subscription data (SD1), is transmitted from the HLR-OLD to the HLR-NEW. The transmitted information elements pertaining to said SD1 or to said PD1 can be identified by known state-of-the-art techniques, such as, for instance, Tag Length Value (TLV) technique, Attribute Value Peer (AVP) technique or any other similar technique used to identify information elements exchanged by messages used in telecommunication protocols.

In step 49 the register (23) looked up in step 45 is removed, thus freeing resources in the HLR-OLD as a consequence of the migration procedure.

This is an optional step whose use advantage, and also suitability, can depend on several factors that are not relevant for the scope of this invention. Said factors can be, for instance: if the network operator of both HLRs (HLR-NEW and HLR-OLD) is the same or not; if (for any reason) it is advantageous or desirable to keep said register (23) for a certain period of time (or unlimited) after the migration procedure took place (it should be possible that the user might still use the old subscription); etc.. In any case, this optional step 49 can take place immediately after the answer message of step 45 have been sent to the HLR-NEW, or take place later, after a predefined period of time has elapsed since said message was sent, or even never take place.

In step 46 the answer message, containing information elements comprising part or all of the requested subscriber data (SD1,PD1), is received and stored in the HLR-NEW in relationship with the existing register 21 that stores the subscriber data (SD2,PD2) of said user within said HLR-NEW.

Inasmuch as the old subscriber data have already been successfully received, in step 47 the aforementioned mark for updating is reset in order to do not perform the migration procedure again. Additionally, within this step 47, also the additional data (22) that were stored in HLR-NEW in connection with register 21 to accomplish with the migration process can be removed.

Step 48 represents further actions performed over register 21 that are the outcome and main goal of all the migration process described above. Within this step each one of the received information elements pertaining to the old subscriber data (SD1,PD1) of said user in said old home server (HLR-OLD,10) is first identified, and then the corresponding equivalent element pertaining to the new subscriber data (SD2,PD2) is pointed out.

The next action shall be: to replace the content stored in register 21 for said information element with the one received (e.g.: if a predefined default value was assigned previously); to insert the new data in register 21 (e.g.: if said element was not previously defined in register 21); or to discard it (e.g.: if said information element is either: not relevant for the NEW-HLR or has already a predefined value that must not be changed, for instance, the new subscriber identifier IMSI-2).

In this way, for example, the status activation of a given supplementary service as well as its supplementary data (e.g.: call-forwarding conditions and forwarding-to numbers) can be written within PD2 of register 21 with the same old values said user had for its old subscription (register 23) within his/her old home server (HLR-OLD). Similarly other data, such as operator determined barring, MSISDN number, etc., can be set up within SD2 of register 21 with the same values as for the old subscription.

The same procedure is then repeated for each one of the received information elements pertaining to the old subscriber data (SD1,PD1).

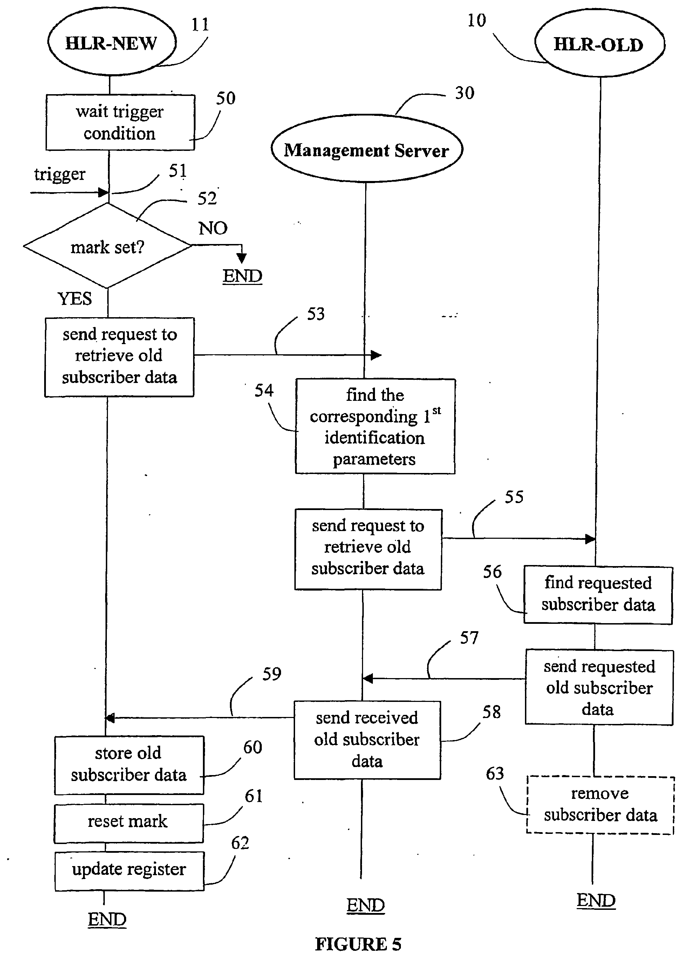

The procedure according to the second embodiment of this invention for migrating subscriber data (SD,PD) related to a given user from the old home server (HLR-OLD, 10), where said user had his/her old subscriber data (SD1,PD1), to the new home server (HLR-NEW, 11), where said user has his/her new subscriber data (SD2,PD2), with the mediation of a management server (30), shall now be described with reference to the flow depicted in Fig. 5.

Steps 50, 51 and 52 within Fig. 5 are respectively the same as steps 40, 41 and 42 explained previously for the first embodiment of this invention with reference to Fig. 4.

If, in step 52 it was detected that the mark for updating was set, then in step 53 a message is sent from the HLR-NEW (11) to the management server (30) requesting to retrieve the old subscriber data of said user (23).

In order to route a message through the various telecommunications nodes in the telecommunications network it can traverse, so it gets the wanted destination node, and also in order to point out in the destination node the particular data said message affects, it is a well-know technique to include in said message one or more parameters that can act both: as routing keys for the routing nodes and as identifiers for the destination node. For this purpose, the message sent in step 53 contains one or more of the aforementioned second identification parameters on it that will serve both: to locate the wanted destination node (management server, 30) and, once in said management server, to identify the right register (31) that, as described earlier, have a one-to-one relationship with the corresponding first identification parameters stored within the same register (31).

Within the scope of this invention, this message, as well as the possible answer message have to be seen as messages exchanged between Application Layer (ISO defined Layer-7) entities in different nodes; wherein MAP, within the scope of a SS#7 protocol stack, or other well known Application Layer communication protocol using other existing protocol stack for communications (such as Transmission Control Protocol over Internet Protocol, or TCP/IP protocol stack), could be a possible implementation alternative to implement said message exchange between application layers entities. Therefore, there could be aspects dealing with lowers layers (such as Session Layer, Transport Layer, Network Layer; etc), and also dealing with the nature of the signalling protocols used across the interconnection network(s) (e.g.: traditional SS#7 signalling, IP based signalling, SS#7 over IP signalling, etc.), that could imply the insertion of some additional parameters in the message (for instance, some routing keys for answering back to the message), or even the initiation of some additional procedures (for instance: initiating an application dialog or establishing one or more transport connections). However, said kind of details does not require any inventive step beyond the methods taught within this invention, since the same existing communication techniques (comprising: dialogs, transportation aspects, etc.) that applies when a communication is established between two communication nodes of a telecommunications network can also be applied for the conveyance of the messages cited within this invention.

When the request message sent in step 53 arrives to the management server (30), in step 54, the management server (30) looks up the appropriate register (31) that contains the corresponding first identification parameters by using the second identification parameters received in said message.

Subsequently, in step 55, a message is sent from the management server (30) to the HLR-OLD (12) requesting to retrieve the old subscriber data of said user (23). With the same routing and identification purposed as mentioned earlier, the message sent in step 55 contains one or more of the aforementioned first identification parameters on it, that are stored in the register (31) identified in step 54, and that will serve both: to route the message to the wanted destination node (HLR-OLD, 10) and, once in said HLR-OLD, to identify the right register (23) that contains the old subscriber data (SD1,PD1) stored in said HLR-OLD. Also, and as mentioned earlier, said message can further contain some additional parameters that would have to be inserted accordingly depending on the signalling protocol used, as well as some additional procedures could also be needed to accomplish with the message transfer requirements.

Steps 56, 57 and 63 within Fig. 5 are respectively the same as steps 44, 45 and 49 explained previously for the first embodiment of this invention with reference to Fig. 4; being the only difference that the answer message in step 57 is sent from the HLR-OLD (10) to the requesting node that, within this second embodiment is the management server (30).

In step 58 the management server (30) could, optionally, perform some actions over the register 31, such as remove said register or mark it as completed. Then, in step 59 it forwards the received answer message to the HLR-NEW.

Steps 60, 61 and 62 within Fig. 5 are respectively the same as steps 46, 47 and 48 explained previously for the first embodiment of this invention with reference to Fig. 4.

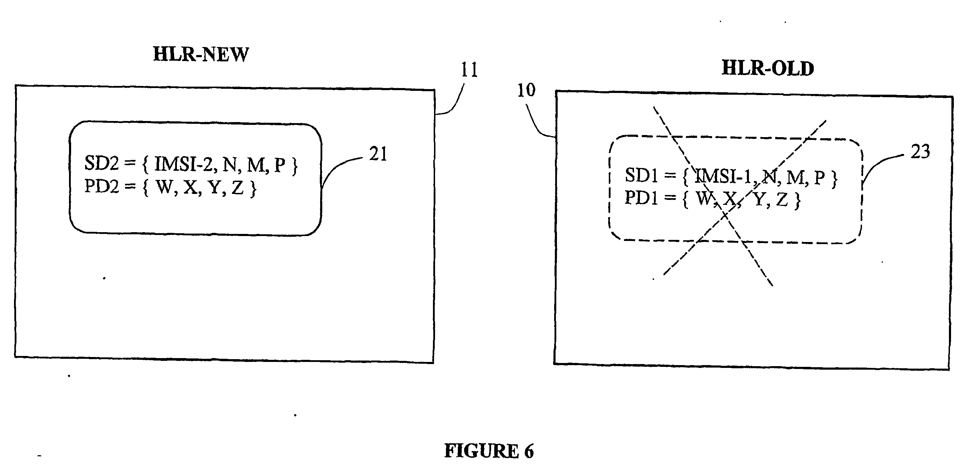

Reference is now made to Fig. 6 to show the content of the registers previously shown in Figures 2 or 3 once the migration procedure took place according to any of the embodiments of this invention.

Concerning to the subscriber data register (21) stored in HLR-NEW (11) that was object of the migration procedure, it can be seen that the previously stored temporary default values for the new subscriber data, have been replaced with the values of the equivalent elements pertaining to the old subscriber data. In this way, some subscription data (SD2), such as the ones named with abstract references "n", "m" and "p" in Figures 2 or 3, as well as some personalisation data (PD2), such as the one named with abstract reference "x" in Figures 2 or 3, have been replaced with non-default values named with abstract references "N, "M, "P" and "X" respectively, as shown in Fig. 6. Similarly, some other data that had no value assigned, such as the ones affecting to new personalization data (PD2) named with abstract references "W", "Y" and "Z", are assigned to the received value.

As mentioned earlier, said abstract references ("n", "m", "p", "x", "N, "M, "P", "W", "X", "Y", "Z") are naming subscription data (SD) as well as personalization data (PD) such as: MSISDN numbers, data related to operator determined barring, data related to provision/withdrawal of supplementary services, user preferences, user profiles, supplementary services auxiliary data, etc.; being no limitation regarding if the migrated data concerns to one or more information elements belonging only to personalization data (PD), or only to subscription data (SD), or to both: personalization data (PD) and subscription data (SD).

Concerning to the subscriber data register (23) stored in HLR-OLD (12) that was object of the migration procedure, Fig. 6 shows the situation wherein this register in particular has been removed as described previously in optional step 49 in Fig. 4 for the first embodiment, and in optional step 63 in Fig. 5 for the second embodiment. Otherwise, this register (23) would remain unmodified as shown in previous Figures 2 and 3.

## Claims

1. Amethod for migrating old subscriber data (23) of a user from a first home server (10, HLR-OLD) to a second home server (11, HLR-NEW) in a tetecommunications network, comprising the steps of:
a) storing in said second home server (11), in relationship with a new subscriber data (21) for said user In said second home server, additional data (22) comprising, at least, an identification parameter (IMSI-2, IMSI-1) usable to address said old subscriber data (23) in said first home server (10), and a mark for updating (MARK) related to a trigger condition (T);
b) sending a request message (43, 53) containing said identification parameter (IMSI-2, IMSI-1) from said second home server (11) to obtain said old subscriber data (23) from said first home server (10) when said trigger condition is detected;
c) receiving a response message (45, 59) containing at least a data element (N,M,P,W,X,Y,Z) of said old subscriber data (23); and,
d) storing in said second home server (11) at least one of the received data elements (N,M,P,W,X,Y,Z) as a part of said new subscriber data (21).

2. The method of claim 1, further comprising the step of resetting said mark for updating (MARK) when said response message (45, 59) has been received.

3. The method of claim 1, further comprising the step of removing the old subscriber data (23) stored in the first home server (10) once said data have been transmitted.

4. The method of claim 1, wherein the step b) further comprises the steps of:
b1) sending said request message (53) to a management server (30);
b2) finding in said management server (30), using the received identification parameter (IMSI-2), a further identification parameter (IMSI-1) which addresses said old subscriber data (23) in said first home server (10); and,
b3) forwarding a request message (55) containing said further identification parameter (IMSI-1) from said management server (30) to said first home server (10).

5. The method of claim 1, wherein the trigger condition (T) depends on a timer and said trigger is detected at a time-out of said timer.

6. The method of claim 1, wherein said new subscriber data (21) comprises, at least, an identifier related to said user (IMSI-2, MSISDN-2) which addresses said new subscriber data, and wherein the trigger condition (T) is detected at the reception of a message containing said identifier.

7. The method of claim 6, wherein said message is one among: a update-location message; a update-GPRS-iocation message; and a IMS-registration message.

8. The method of claim 1, wherein said identification parameter comprises at least one identifier, or any combination thereof, among: the subscriber identity (IMSI-1) related to the old subscriber data (23) of said user in said first home server (10); the subscriber directory number (MSISDN-1) related to said old subscriber data (23); the directory number of said first home server (10) plus a subscriber identification (IMSI-1, MSISDN-1) related to said old subscriber data (23); the subscriber identity (IMSI-2) related to the new subscriber data (21) of said user in said second home server (11); and the subscriber directory number (MSISDN-2) related to said new subscriber data (21).

9. A home server (11, HLR-NEW) in a telecommunications network, arranged to store subscriber data (21) of a user, **characterized in that**, for obtaining old subscriber data (23) of said user stored in a further home server (10,HLR-OLD), it is further arranged to:
- store, in relationship with said subscriber data (21), additional data (22) comprising, at least, an identification parameter (IMSI-2, IMSI-1) usable to address said old subscriber data (23) in said further home server (10), and a mark for updating (MARK) related to a trigger condition (T),
- send a request message (43, 53) containing said identification parameter (IMSI-2, IMSI-1) to obtain said old subscriber data (23) from said further home server (10) when said trigger condition is detected,
- receive a response message (45, 59) containing at least a data element (N,M,P,W,X,Y,Z) of said old subscriber data (23), and
- store at least one of the received data elements (N,M,P,W,X,Y,Z) as a part of said new subscriber data (21).

10. The home server of claim 9, further arranged to reset said mark for updating (MARK) when said response message (45, 59) has been received.

11. The home server of claim 9, wherein the trigger condition (T) depends on a timer, and wherein said home server is further arranged to detect said trigger condition at a time-out of said timer.

12. The home server of claim 9, wherein said new subscriber data (21) comprises, at least, an identifier related to said user (IMSI-2, MSISDN-2) which addresses said new subscriber data, and wherein said home server is further arranged to detect said trigger condition at the reception of a message containing said identifier.

13. The home server of claim 9, wherein said identification parameter comprises at least one identifier, or any combination thereof, among: the subscriber identity (IMSI-1) related to the old subscriber data (23) of said user in said further home server (10,HLR-OLD); the subscriber directory number (MSISDN-1) related to said old subscriber data (23); the directory number of said further home server (10) plus a subscriber identification (IMSI-1, MSISDN-1) related to said old subscriber data (23); the subscriber identity (IMSI-2) related to the subscriber data (21) of said user in said home server (11,HLR-NEW); and the subscriber directory number (MSISDN-2) related to said subscriber data (21).

## Patentansprüche

1. Verfahren zum Transferieren von alten Teilnehmerdaten (23) eines Benutzers von einem ersten Heimserver (10, HLR-ALT) zu einem zweiten Heimserver (11, HLR-NEU) in einem Telekommunikationsnetz, das die folgenden Schritte umfasst:
a) Speichern von zusätzlichen Daten (22) im zweiten Heimserver (11), in Verbindung mit neuen Teilnehmerdaten (21) für den Benutzer im zweiten Heimserver, wobei die zusätzlichen Daten (22) mindestens einen Identifikationsparameter (IMSI-2, IMSI-1), der zum Adressieren der alten Teilnehmerdaten (23) im ersten Heimserver (10) verwendbar ist, und eine Markierung zur Aktualisierung (MARK), die einer Auslöserbedingung (T) zugeordnet ist, umfassen;
b) Senden einer Anforderungsnachricht (43, 53), die den Identifikationsparameter (IMSI-2, IMSI-1) enthält, vom zweiten Heimserver (11), um die alten Teilnehmerdaten (23) vom ersten Heimserver (10) zu erlangen, wenn die Auslöserbedingung erfasst wird;
c) Empfangen einer Antwortnachricht (45, 59), die mindestens ein Datenelement (N, M, P, W, X, Y, Z) der alten Teilnehmerdaten (23) enthält; und
d) Speichern von mindestens einem der empfangenen Datenelemente (N, M, P, W, X, Y, Z) als einem Teil der neuen Teilnehmerdaten (21) im zweiten Heimserver (11).

2. Verfahren nach Anspruch 1, das weiterhin den Schritt des Zurücksetzens der Markierung zur Aktualisierung (MARK), wenn die Antwortnachricht (45, 59) empfangen worden ist, umfasst.

3. Verfahren nach Anspruch 1, das weiterhin den Schritt des Löschens der alten Teilnehmerdaten (23), die im ersten Heimserver (10) gespeichert sind, nachdem die Daten übertragen worden sind, umfasst.

4. Verfahren nach Anspruch 1, wobei der Schritt b) weiterhin die folgenden Schritte umfasst:
b1) Senden der Anforderungsnachricht (53) an einen Verwaltungsserver (30);
b2) Suchen, unter Verwendung des empfangenen Identifikationsparameters (IMSI-2), eines weiteren Identifikationsparameters (IMSI-1) im Verwaltungsserver (30), der die alten Teilnehmerdaten (23) im ersten Heimserver (10) adressiert; und
b3) Weiterleiten einer Anforderungsnachricht (55), die den weiteren Identifikationsparameter (IMSI-1) enthält, vom Verwaltungsserver (30) zum ersten Heimserver (10).

5. Verfahren nach Anspruch 1, wobei die Auslöserbedingung (T) von einem Taktgeber abhängt und der Auslöser bei einem Timeout des Taktgebers erfasst wird.

6. Verfahren nach Anspruch 1, wobei die neuen Teilnehmerdaten (21) mindestens eine Kennung umfassen, die dem Benutzer zugeordnet ist (IMSI-2, MSISDN-2) und die die neuen Teilnehmerdaten adressiert, und wobei die Auslöserbedingung (T) beim Empfang einer Nachricht, die die Kennung enthält, erfasst wird.

7. Verfahren nach Anspruch 6, wobei die Nachricht eine der folgenden ist: eine Ortsaktualisierung-Nachricht, eine GPRS-Ortsaktualisierung-Nachricht oder eine IMS-Registrierung-Nachricht.

8. Verfahren nach Anspruch 1, wobei der Identifikationsparameter mindestens eine Kennung der folgenden, oder eine beliebige Kombination dieser, umfasst: die Teilnehmerkennung (IMSI-1), die den alten Teilnehmerdaten (23) des Benutzers im ersten Heimserver (10) zugeordnet ist; die Teilnehmerfernsprechnummer (MSISDN-1), die den alten Teilnehmerdaten (23) zugeordnet ist; die Fernsprechnummer des ersten Heimservers (10) plus einer Teilnehmerkennung (IMSI-1, MSISDN-1), die den alten Teilnehmerdaten (23) zugeordnet ist; die Teilnehmerkennung (IMSI-2), die den neuen Teilnehmerdaten (21) des Benutzers im zweiten Heimserver (11) zugeordnet ist; und die Teilnehmerfernsprechnummer (MSISDN-2), die den neuen Teilnehmerdaten (21) zugeordnet ist.

9. Heimserver (11, HLR-NEU) in einem Telekommunikationsnetz, der zum Speichern von Teilnehmerdaten (21) eines Benutzers ausgeführt ist, **dadurch gekennzeichnet, dass** er zum Erlangen alter Teilnehmerdaten (23) des Benutzers, die in einem weiteren Heimserver (10, HLR-ALT) gespeichert sind, weiterhin zu Folgendem ausgeführt ist:
- Speichern von zusätzlichen Daten (22), in Verbindung mit den Teilnehmerdaten (21), wobei die zusätzlichen Daten (22) mindestens einen Identifikationsparameter (IMSI-2, IMSI-1), der zum Adressieren der alten Teilnehmerdaten (23) im weiteren Heimserver (10) verwendbar ist, und eine Markierung zur Aktualisierung (MARK), die einer Auslöserbedingung (T) zugeordnet ist, umfassen,
- Senden einer Anforderungsnachricht (43, 53), die den Identifikationsparameter (IMSI-2, IMSI-1) enthält, um die alten Teilnehmerdaten (23) vom weiteren Heimserver (10) zu erlangen, wenn die Auslöserbedingung erfasst wird,
- Empfangen einer Antwortnachricht (45, 59), die mindestens ein Datenelement (N, M, P, W, X, Y, Z) der alten Teilnehmerdaten (23) enthält, und
- Speichern von mindestens einem der empfangenen Datenelemente (N, M, P, W, X, Y, Z) als einem Teil der neuen Teilnehmerdaten (21).

10. Heimserver nach Anspruch 9, der weiterhin dazu ausgeführt ist, die Markierung zur Aktualisierung (MARK) zurückzusetzen, wenn die Antwortnachricht (45, 59) empfangen worden ist.

11. Heimserver nach Anspruch 9, wobei die Auslöserbedingung (T) von einem Taktgeber abhängt und wobei der Heimserver weiterhin dazu ausgeführt ist, die Auslöserbedingung bei einem Timeout des Taktgebers zu erfassen.

12. Heimserver nach Anspruch 9, wobei die neuen Teilnehmerdaten (21) mindestens eine Kennung umfassen, die dem Benutzer zugeordnet ist (IMSI-2, MSISDN-2) und die die neuen Teilnehmerdaten adressiert, und wobei der Heimserver weiterhin dazu ausgeführt ist, die Auslöserbedingung beim Empfang einer Nachricht, die die Kennung enthält, zu erfassen.

13. Heimserver nach Anspruch 9, wobei der Identifikationsparameter mindestens eine Kennung der folgenden, oder eine beliebige Kombination dieser, umfasst: die Teilnehmerkennung (IMSI-1), die den alten Teilnehmerdaten (23) des Benutzers im weiteren Heimserver (10, HLR-ALT) zugeordnet ist; die Teilnehmerfernsprechnummer (MSISDN-1), die den alten Teilnehmerdaten (23) zugeordnet ist; die Fernsprechnummer des weiteren Heimservers (10) plus einer Teilnehmerkennung (IMSI-1, MSISDN-1), die den alten Teilnehmerdaten (23) zugeordnet ist; die Teilnehmerkennung (IMSI-2), die den Teilnehmerdaten (21) des Benutzers im Heimserver (11, HLR-NEU) zugeordnet ist; und die Teilnehmerfernsprechnummer (MSISDN-2), die den Teilnehmerdaten (21) zugeordnet ist.

## Revendications

1. Procédé de migration de données d'abonné anciennes (23) d'un utilisateur d'un premier serveur de rattachement (10, HLR-OLD) vers un second serveur de rattachement (11, HLR-NEW) dans un réseau de télécommunications, comprenant les étapes consistant à :
a) mémoriser dans ledit second serveur de rattachement (11), en relation avec de nouvelles données d'abonné (21) dudit utilisateur dans ledit second serveur de rattachement, des données additionnelles (22) comprenant, au moins, un paramètre d'identification (IMSI-2, IMSI-1) utilisable afin d'adresser lesdites données d'utilisateur anciennes (23) dans ledit premier serveur de rattachement (10) et une marque de mise à jour (MARK) liée à une condition de déclenchement (T) ;
b) envoyer un message de demande (43,53) contenant ledit paramètre d'identification (IMSI-2, IMSI-1) dudit second serveur de rattachement (11) afin d'obtenir lesdites données d'abonné anciennes (23) dudit premier serveur de rattachement (10) lorsque ladite condition de déclenchement est détectée ;
c) recevoir un message de réponse (45,59) contenant au moins un élément de donnée (N, M, P, W, X, Y, Z) desdites données d'abonné anciennes (23) ; et
d) mémoriser dans ledit second serveur de rattachement (11) au moins un des éléments de donnée reçus (N,M,P,W,X,Y,Z) en tant que partie desdites nouvelles données d'abonné (21).

2. Procédé de la revendication 1, comprenant en outre l'étape qui consiste à réinitialiser ladite marque de mise à jour (MARK) lorsque ledit message de réponse (45,59) a été reçu.

3. Procédé de la revendication 1, comprenant en outre l'étape qui consiste à supprimer les données d'abonné anciennes (23) mémorisées dans le premier serveur de rattachement (10) une fois que lesdites données ont été transmises.

4. Procédé de la revendication 1, dans lequel l'étape b) comprend en outre les étapes consistant à ;
b1) envoyer ledit message de demande (53) vers un serveur de gestion (30) ;
b2) trouver dans ledit serveur de gestion (30), en utilisant le paramètre d'identification reçu (IMSI-2), un paramètre d'identification supplémentaire (IMSI-1) qui adresse lesdites données d'abonné anciennes (23) dans ledit premier serveur de rattachement (10) ; et
b3) acheminer un message de demande (55) contenant ledit paramètre d'identification supplémentaire (IMSI-1) dudit serveur de gestion (30) vers ledit premier serveur de rattachement (10).

5. Procédé de la revendication 1, dans lequel la condition de déclenchement (T) dépend d'un temporisateur et ledit déclenchement est détecté à une temporisation dudit temporisateur.

6. Procédé de la revendication 1, dans lequel lesdites nouvelles données d'abonné (21) comprennent, au moins, un identifiant relatif audit utilisateur (IMSI-2, MSISDN-2) qui adresse lesdites nouvelles données d'abonné et dans lequel la condition de déclenchement (T) est détectée à la réception d'un message contenant ledit identifiant.

7. Procédé de la revendication 6, dans lequel ledit message est un message parmi : un message de mise à jour de localisation, un message de mise à jour de localisation GPRS et un message d'enregistrement IMS.

8. Procédé de la revendication 1, dans lequel ledit paramètre d'identification comprend au moins un identifiant ou n'importe quelle combinaison d'identifiants parmi : l'identité d'abonné (IMSI-1) relative aux données d'abonné anciennes (23) dudit utilisateur dans ledit premier serveur de rattachement (10) ; le numéro d'annuaire d'abonné (MSISDN-1) relatif auxdites données d'abonné anciennes (23) ; le numéro d'annuaire dudit premier serveur de rattachement (10) plus une identification d'abonné (IMSI-1, MSISDN-1) liée auxdites données d'abonné anciennes (23) ; l'identité d'abonné (IMSI-2) relative aux nouvelles données d'abonné (21) dudit utilisateur dans ledit second serveur de rattachement (11) ; et le numéro d'annuaire d'abonné (MSISDN-2) relatif auxdites nouvelles données d'abonné (21).

9. Serveur de rattachement (11, HLR-NEW) dans un réseau de télécommunications, agencé de manière à mémoriser des données d'abonné (21) d'un utilisateur, **caractérisé en ce que**, pour obtenir des données d'abonné anciennes (23) dudit utilisateur mémorisées dans un autre serveur de rattachement (10, HLR-OLD), il est aussi agencé de manière à :
- mémoriser, en relation avec lesdites données d'abonné (21), des données supplémentaires (22) comprenant, au moins, un paramètre d'identification (IMSI-2, IMSI-1) utilisable afin d'adresser lesdites données d'utilisateur anciennes (23) dans ledit premier serveur de rattachement (10), et une marque de mise à jour (MARK) liée à une condition de déclenchement (T) ;
- envoyer un message de demande (43,53) contenant ledit paramètre d'identification (IMSI-2, IMSI-1) afin d'obtenir lesdites données d'abonné anciennes (23) dudit serveur de rattachement supplémentaire (10) lorsque ladite condition de déclenchement est détectée;
- recevoir un message de réponse (45,59) contenant au moins un élément de donnée (N,M,P,W,X,Y,Z) desdites données d'abonné anciennes (23) ; et
- mémoriser au moins un des éléments de donnée reçus (N,M,P,W,X,Y,Z) en tant que partie desdites nouvelles données d'abonné (21).

10. Serveur de rattachement de la revendication 9, agencé en outre de manière à réinitialiser ladite marque de mise à jour (MARK) lorsque ledit message de réponse (45,59) a été reçu.

11. Serveur de rattachement de la revendication 9, dans lequel la condition de déclenchement (T) dépend d'un temporisateur et dans lequel ledit serveur de rattachement est en outre agencé de manière à détecter ladite condition de déclenchement à une temporisation dudit temporisateur.

12. Serveur de rattachement de la revendication 9, dans lequel lesdites nouvelles données d'abonné (21) comprennent, au moins, un identifiant relatif audit utilisateur (IMSI-2, MSISDN-2) qui adresse lesdites nouvelles données d'abonné et dans lequel ledit serveur de rattachement est en outre agencé de manière à détecter ladite condition de déclenchement à la réception d'un message contenant ledit identifiant.

13. Serveur de rattachement de la revendication 9, dans lequel ledit paramètre d'identification comprend au moins un identifiant ou n'importe quelle combinaison d'identifiants parmi :l'identité d'abonné (IMSI-1) relative aux données d'abonné anciennes (23) dudit utilisateur dans ledit serveur de rattachement supplémentaire (10, HLR-OLD) ; le numéro d'annuaire d'abonné (MSISDN-1) relatif auxdites données d'abonné anciennes (23) ; le numéro d'annuaire dudit serveur de rattachement supplémentaire (10) plus une identification d'abonné (IMSI-1, MSISDN-1) liée auxdites données d'abonné anciennes (23) ; l'identité d'abonné (IMSI-2) relative aux données d'abonné (21) dudit utilisateur dans ledit serveur de rattachement (11, HLR-NEW) ; et le numéro d'annuaire d'abonné (MSISDN-2) relatif auxdites données d'abonné (21).
